# EUROPÄISCHE PATENTSCHRIFT

(11) **EP 1 626 164 B1**
(45) Veröffentlichungstag und Bekanntmachung des Hinweises auf die Patenterteilung: **05.09.2007**
(21) Anmeldenummer: 05107166.0
(22) Anmeldetag: 03.08.2005
(51) Int. Cl.: F01D 11/04, F16J 15/42

(54) **Hydraulische Wellendichtung für den Hochtemperaturbereich**
Hydraulic shaft seal for high temperature regions
Joint d'étanchéité de type hydraulique pour arbre rotatif pour un domaine de températures élevées

(30) Priorität: 13.08.2004 DE 102004040242
(43) Veröffentlichungstag der Anmeldung: 15.02.2006
(73) Patentinhaber: Rolls-Royce Deutschland Ltd & Co KG, 15827 Blankenfelde-Mahlow (DE)
(72) Erfinder: Gäbler, Miklos, 14480, Potsdam (DE); Hein, Stefan, 12305, Berlin (DE)
(74) Vertreter: Wablat, Wolfgang

(56) Entgegenhaltungen:
- EP-A- 1 045 178
- EP-A- 1 327 802
- GB-A- 2 125 118
- US-A- 4 157 881

## Beschreibung

Die Erfindung betrifft eine hydraulische Wellendichtung für den Hochtemperaturbereich, insbesondere für konzentrisch angeordnete Wellen eines Gasturbinen-Triebwerks zur Abdichtung der im Niederdruckbereich liegenden Lagerkammer für die Hochdruckwelle und die Niederdruckwelle gegenüber dem Hochdruckbereich.

Hydraulische Dichtungen werden bekanntermaßen zur berührungslosen Abdichtung zwischen zwei konzentrisch angeordneten, gleichsinnig rotierenden Wellen angewendet. Prinzipiell ist eine derartige Dichtung aber auch bei nur einer rotierenden Welle einsetzbar. Die Dichtung umfasst üblicherweise einen am Innenumfang der äußeren Welle vorgesehenen, im Wesentlichen U-förmigen Ringraum, in dem sich unter der Wirkung der Fliehkraft ein fließfähiges Dichtmedium, vorzugsweise Öl, aus dem Schmiermittelkreislauf der betreffenden Maschine, befindet. In das Dichtmedium in dem Ringraum taucht ein am Außenumfang der inneren Welle umlaufender Dichtsteg, um so eine berührungslose Abdichtung der beiden Wellen gegeneinander zu bewirken.

Derartige hydraulische Dichtungen haben sich vielfach bewährt. Sie bereiten jedoch bei der Anwendung im Hochtemperaturbereich, vorzugsweise bei der Abdichtung der Lagerkammer für die Hochdruckwelle und die Niederdruckwelle eines Gasturbinen-Triebwerks gegenüber der mit einer Temperatur von beispielsweise 400°C zugeführten Verdichterluft, insofern Schwierigkeiten, als sich das als Dichtmedium verwendete Öl, das auch zum Schmieren der beiden Wellenlager dient, aufgrund der hohen Temperaturen zersetzen und verkoken kann. Insbesondere auf der dem Hochtemperaturbereich zugewandten Seite setzen sich an der Innenfläche des Ringraums feste Verkokungsprodukte ab, die sich im Betrieb lösen können und dem kontinuierlichen Nachfüllen von frischem, kühlerem Öl in den Ringraum und der durch den kontinuierlichen Ölaustausch bewirkten notwendigen Wärmeabfuhr sowie letztlich einer sicheren Abdichtung entgegenstehen.

Eine derartige hydraulische Dichtung wird in der Anwendung bei einem Zweiwellen-Gasturbinen-Flugtriebwerk mit konzentrisch angeordneter Hoch- und Niederdruckwelle zur Abdichtung im Hochtemperaturbereich beispielsweise in der EP 1 045 178 A2 beschrieben. Der zur Aufnahme des Dichtmediums vorgesehene Ringraum, in den der Dichtsteg der Niederdruckwelle eingreift, ist unmittelbar aus dem Material der Hochdruckwelle ausgeformt. Daraus resultieren die durch eine erhebliche Baugröße und ein hohes Gewicht für ein Flugtriebwerk bekannten Nachteile. Die Zuführung des Dichtmediums in den Ringraum erfolgt kontinuierlich aus dem in die Lagerkammer zur Schmierung der Wälzlager der Hochdruckwelle und der Niederdruckwelle eingespritzten Öl. Eine Teilmenge des Dichtmediums im Ringraum wird entweder über eine Öffnung im Boden oder mit Hilfe eines Abschöpfbleches vom Boden über die obere Innenkante des Ringraums kontinuierlich abgezogen. Durch den ständigen Ölaustausch wird das Dichtmedium nicht zu hoch erhitzt und dadurch einem Verkoken entgegengewirkt. Das Abführen des Dichtmediums aus einem im Boden ausgeformten Ringraumbereich ist aber insofern nachteilig, als bei unzureichender Ölzufuhr nicht genügend Dichtmedium im Ringraum ist und mithin die Abdichtung gegenüber dem heißen Hochdruckbereich gestört ist. Beim Abführen des erhitzten Dichtmediums über den äußersten Rand des Ringraums wird das relativ heiße Dichtmedium auf einem langen Weg entlang der Wand eines in den Ringraum eingesetzten Winkelringes und der Ringrauminnenwand geführt, so dass sich auch hier Ölkohlepartikel absetzen können. Zudem kann es selbst bei einem kontinuierlichen Ölaustausch in dem Ringraum dennoch zur Ausbildung einer Kohleschicht an der heißen Innenwand des mit dem Dichtmedium gefüllten Ringraums kommen.

Der Erfindung liegt daher die Aufgabe zugrunde, eine hydraulische Wellendichtung anzugeben, die auch im Hochtemperaturbereich eine Ölkohlebildung verhindert, für eine jederzeit sichere Abdichtung sorgt und die zudem platz-, gewichts- und montagezeitsparend ausgebildet ist und einen schnellen Ölaustausch gewährleistet.

Erfindungsgemäß wird die Aufgabe mit einer gemäß den Merkmalen des Patentanspruchs 1 ausgebildeten hydraulischen Wellendichtung gelöst.

Der Grundgedanke der Erfindung besteht in der Anordnung eines dem Ringraum für die Aufnahme des Dichtmediums im Abstand von dessen an den Hochdruck- bzw. Hochtemperaturbereich angrenzenden Seitenfläche vorgeschalteten Hitzeschutzring, der an der einen Welle angebracht ist und unter Ausbildung eines engen Dichtspaltes in geringem Abstand von der anderen Welle endet. Dadurch ist der Ringraum mit dem Dichtmedium durch ein Schutzschild und eine wärmeisolierende Luftkammer/Stagnationszone von der unmittelbaren Wärmeeinwirkung im Hochtemperaturbereich getrennt. Die Erwärmung des Dichtmediums und dessen Neigung zur Verkokung aufgrund hoher Temperaturen sowie zur Ablagerung von Ölkohlepartikeln an den besonders heißen Innenwandflächen des Ringraumes werden deutlich verringert. Der kontinuierliche Austausch des gesamten Dichtmediums im Ringraum wird aufgrund der verminderten Ölkohlebildung verbessert, so dass die Temperatur des Dichtmediums und die Verkokungsgefahr weiter minimiert werden.

Gemäß einem weiteren wichtigen Merkmal der Erfindung sind an den Innenwänden des Ringraums Mittel angebracht, die bei der Rotation des Ringraums eine Pumpwirkung auf das Dichtmedium ausüben und den Medientransport über den Ringraum beschleunigen, d.h. das kontinuierliche Austauschen des Dichtmediums verbessern, so dass dessen Temperatur weiter verringert werden kann. Insbesondere in der Kombination aus für den Hitzeschutz und den verbesserten Medientransport bzw. -austausch vorgesehenen Maßnahmen kann die Temperatur des Dichtmediums so weit gesenkt werden, dass im Hochtemperaturbereich eine fehlerfreie Abdichtung der Hochdruckwelle gegenüber der Niederdruckwelle bzw. der an den Hochdruckbereich angrenzenden hinteren Lagerkammer und somit ein Schutz der betreffenden Wälzlager und der Kohlegleitringdichtung sowie eine sichere Funktion der Gasturbine gewährleistet sind. Ferner bewirkt die aktive Kühlung der Kohlegleitring-Lauffläche eine Verlängerung der Lebensdauer der eingesetzten Kohlegleitringdichtung.

Gemäß einem weiteren wichtigen Merkmal der Erfindung ist der an der äußeren rotierenden Welle vorgesehene Ringraum zur Aufnahme des Dichtmediums aus einer an der Welle angeformten ersten Ringscheibe und einer separaten zweiten Ringscheibe gebildet. Dadurch wird die Montage der Welle vereinfacht sowie die Bauhöhe und das Gewicht in diesem Bereich verringert. In den Ringraum ist ein Winkelring so eingesetzt, dass das Dichtmedium nahe der am meisten erwärmten ersten Ringscheibe und nahe dem Boden über einen zwischen dem Boden und der zweiten Ringscheibe gebildeten Ringkanal über die nach innen weisende freie Kante der zweiten Ringscheibe in die Lagerkammer abfließen kann. Somit wird zuerst das heißeste, am ehesten verkokte Dichtmedium abgezogen, und zwar so, dass in jedem Fall, das heißt, auch bei einer Unterbrechung der Ölzufuhr, Dichtmedium in einem durch die Höhe der zweiten Ringscheibe vorgegebenen Flüssigkeitsstand in dem Ringraum verbleibt und die Dichtfunktion noch gewährleistet ist.

In Ausgestaltung der Erfindung ist der Winkelring über mehrere Abstandhalter am Boden und an der zweiten Ringscheibe gehalten. Diese axialen und radialen Abstandhalter bilden in einer bestimmten schrägen Anordnung und Ausbildung die erfindungsgemäßen Mittel zur Erzeugung der Pumpwirkung für den beschleunigten Austausch des Dichtmediums in dem Ringraum der hydraulischen Wellendichtung.

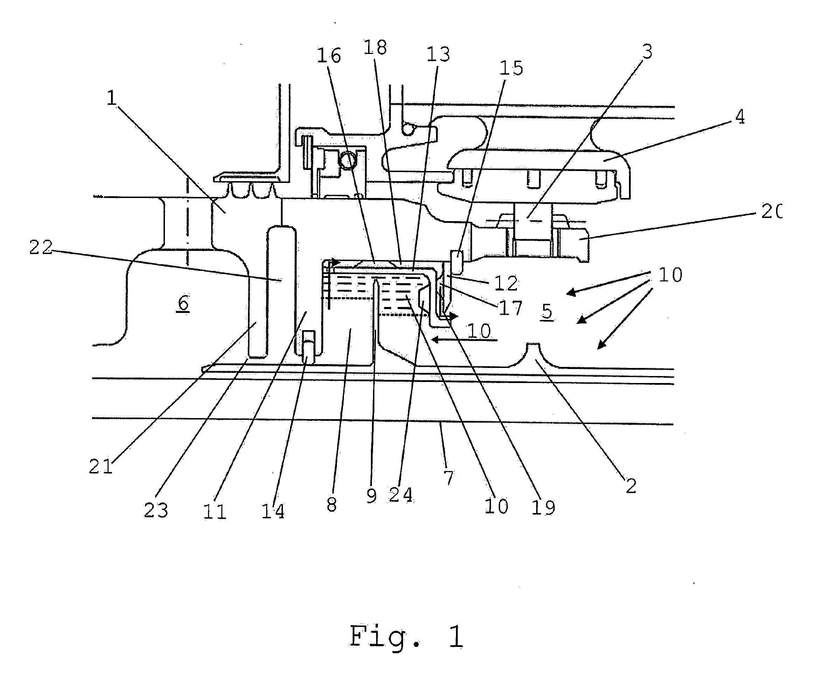

Ein Ausführungsbeispiel der Erfindung wird anhand der Zeichnung näher erläutert. Die einzige Figur zeigt einen Halbschnitt einer zur Lagerung der Hochdruckwelle und der Niederdruckwelle eines Gasturbinen-Triebwerks gebildeten, zwischen der Hoch- und der Niederdruckseite hydraulisch abgedichteten Lagerkammer.

Die Hochdruckwelle 1 und die Niederdruckwelle 2 eines Gasturbinen-Triebwerks sind über ein erstes Wälzlager 3 für die Hochdruckwelle 1 und ein zweites Wälzlager (nicht dargestellt) für die Niederdruckwelle 2 konzentrisch zueinander am Turbinengehäuse 4 gelagert. Die auf diese Weise gebildete Lagerkammer 5 wird zur Kühlung und Schmierung kontinuierlich mit Kühl- und Schmiermittel (Öl) versorgt. Um den Niedrigdruckbereich in der Lagerkammer 5 gegenüber dem relativ heißen Hochdruckbereich 6 abzudichten und dadurch eine Verkokung und Entzündung des Öls zu verhindern, sind die beiden vorzugsweise gleichsinnig rotierenden Wellen, hier die Hochdruckwelle 1 und die Niederdruckwelle 2, mittels einer hydraulischen Dichtung gegeneinander abgedichtet. Die hydraulische Dichtung umfasst einen an der Hochdruckwelle 1 ausgebildeten, zur Rotationsachse 7 hin offenen U-förmigen Ringraum 8, der infolge der durch die Rotation der Hochdruckwelle 1 wirkenden Zentrifugalkräfte mit dem in die Lagerkammer 5 eingebrachten Kühl- und Schmiermittel gefüllt ist, sowie einen am Außenumfang der Niederdruckwelle 2 umlaufenden Dichtsteg 9, der in den Ringraum 8 und das in diesem während der Rotation der Hochdruckwelle 1 befindliche Dichtmedium 10 eintaucht und so die Niederdruckwelle 2 gegenüber der Hochdruckwelle 1 bzw. den Niederdruckbereich in der Lagerkammer 5 gegenüber dem Hochdruckbereich 6 abdichtet.

Der U-förmige Ringraum 8 wird von einer ersten Ringscheibe 11, einer zweiten Ringscheibe 12 und einem Winkelring 13 gebildet. Die erste Ringscheibe 11 ist an der Innenseite der Hochdruckwelle 1 integral angeformt und hat an ihrem freien Rand einen Kolbenring 14, der während der Rotation der Hochdruckwelle einen schmalen Ringspalt zur Außenseite der Niederdruckwelle 2 hin freigibt und im Stillstand eine Abdichtung bewirkt. Die zweite Ringscheibe 12, die einen deutlich größeren Innenumfang als die erste Ringscheibe 11 hat, d.h. schmaler als dieser ist, wird mit Hilfe eines Sprengrings 15 an der Innenumfangsfläche der Hochdruckwelle 1 gehalten. Zwischen der ersten und der zweiten Ringscheibe 11, 12 befindet sich der Winkelring 13, dessen waagerechter Schenkel über radiale Abstandhalter 16 fest mit der Hochdruckwelle 1 verbunden ist und dessen zur Niederdruckwelle 2 hin gerichteter senkrechter Schenkel über axiale Abstandhalter 17 an der zweiten Ringscheibe 12 anliegt.

Der so mit einer separaten Ringscheibe von dem Lagerträger 20 an der Hochdruckwelle 1 abgekoppelte Ringraum 8 hat eine geringe Bauhöhe und ein geringes Gewicht. Der Fertigungs- und Montageaufwand ist gegenüber bekannten ähnlichen hydraulischen Dichtungsanordnungen reduziert. Das während der Rotation der Hochdruckwelle 1 kontinuierlich in den Ringraum 8 eingebrachte Dichtmedium 10 (Kühl- und Schmiermittel; Öl) fließt nach der Wärmeaufnahme an der ersten Ringscheibe 11 über den zwischen dem Winkelring 13 und der Hochdruckwelle 1 bzw. der zweiten Ringscheibe 12 verbleibenden Ringkanal 18 schnell aus dem Ringraum 8 wieder in die Lagerkammer 5. Die Austrittsöffnung 19 des Ringkanals 18 befindet sich in einem solchen Abstand zur Innenfläche der Hochdruckwelle 1, und zwar radial nach innen oberhalb der freien Kante des Dichtsteges 9, dass bei kontinuierlicher Zufuhr des Kühl- und Schmiermittels in die Lagerkammer 5 ein schneller, laufender Austausch des erwärmtem Dichtmediums 10 in dem Ringraum 8 und damit auch dessen ausreichende Kühlung, insbesondere an der Innenfläche der den hohen Temperaturen am ehesten ausgesetzten ersten Ringscheibe 11, gewährleistet ist. Andererseits sorgt diese Anordnung der Austrittsöffnung 19 dafür, dass auch bei unzureichender, nicht exakt dosierter Zuführung von Kühl- und Schmiermittel in die Lagerkammer 5 ein die Dichtwirkung der hydraulischen Dichtung nicht beeinträchtigender Dichtmedium-stand in der Ringkammer 8 nicht unterschritten wird und damit in jedem Fall die Abdichtung zwischen Hochdruckbereich 6 und Lagerkammer 5 bzw. zwischen der Hoch- und der Niederdruckwelle sichergestellt ist. Der schnelle kontinuierliche Austausch des Kühl- und Schmiermittels, d.h. des Dichtmediums in dem Ringraum 8, wird durch eine winklige Anordnung und besondere Ausbildung der radialen und axialen Abstandhalter 16, 17 insofern unterstützt, als diese eine Pumpwirkung auf das in der Ringkammer 8 befindliche Dichtmedium ausüben. Durch die aktive Ölzirkulation über die Ringkammer 8 wird die Wahrscheinlichkeit des Auftretens von Zonen heißen Öls mit der Folge von Verkokungen und örtlichen Kohleablagerungen und einer dadurch bedingten Beeinträchtigung der Ölzufuhr minimiert.

Zusätzlich zu den zuvor beschriebenen Maßnahmen zur aktiven Ölzirkulation zur Vermeidung örtlicher Überhitzung sowie Verkokung und Kohleablagerung ist der hydraulischen Dichtung für die Lagerkammer 5 auf der Hochdruckseite 6 eine Wärmeschutzanordnung vorgeschaltet. Diese Wärmeschutzanordnung wird in der vorliegenden Ausführungsform mit einem an der Hochdruckwelle 1 angeformten Hitzeschutzring 21 und einer zwischen diesem und dem anschließenden ersten Ringsteg 11 gebildeten Luftstaukammer 22 realisiert. Dadurch wird der Ringraum 8 der hydraulischen Dichtung und mithin das zirkulierende Öl weniger stark erwärmt, so dass die Gefahr von Verkokungen und Ablagerungen weiter minimiert wird und auch die Wälzlager für die Hoch- und die Niederdruckwelle durch ein qualitativ nicht beeinträchtigtes Schmiermittel besser geschützt sind. Zur Verwirbelung des Dichtmediums und zur weiteren Verbesserung des Dichtmedientransports im Ringraum 8 sind an dem Winkelring 13 Vorsprünge 24 angeformt.

### Bezugszeichenliste

- 1: Hochdruckwelle
- 2: Niederdruckwelle
- 3: Wälzlager von 1
- 4: Turbinengehäuse
- 5: Lagerkammer (Niedrigdruckbereich)
- 6: Hochdruckbereich (Hochtemperaturbereich)
- 7: Rotationsachse von 1, 2
- 8: U-förmiger Ringraum
- 9: Dichtsteg
- 10: Dichtmedium
- 11: Erste (angeformte) Ringscheibe v. 8
- 12: Zweite (separate) Ringscheibe v. 8
- 13: Winkelring v. 8
- 14: Kolbenring
- 15: Sprengring
- 16: Radialer Abstandhalter
- 17: Axialer Abstandhalter
- 18: Ringkanal (Ablaufkanal)
- 19: Austrittsöffnung v. 18
- 20: Lagerträger v. 1
- 21: Hitzeschutzring
- 22: Luftkammer/Stagnationszone
- 23: Dichtspalt
- 24: Vorsprünge, Verwirbelungsmittel

## Patentansprüche

1. Hydraulische Wellendichtung für den Hochtemperaturbereich, insbesondere für konzentrisch angeordnete Wellen (1, 2) eines Gasturbinen-Triebwerks zur Abdichtung der im Niederdruckbereich liegenden Lagerkammer (5) für die Hochdruckwelle (1) und die Niederdruckwelle (2) gegenüber dem Hochdruckbereich (6), mit einem im Wesentlichen U-förmigen, am Innenumfang der Hochdruckwelle (1) umlaufenden Ringraum (8), in dem sich ein durch Fliehkräfte gehaltenes, kontinuierlich ausgetauschtes Dichtmedium (10) befindet, sowie einem in das Dichtmedium (10) eintauchenden ringförmigen Dichtsteg (9), **dadurch gekennzeichnet, dass** dem Ringraum (8) im Hochdruckbereich (6) in bestimmtem Abstand zum Ringraum (8) und mit einem zur Niederdruckwelle (2) verbleibenden Dichtspalt (23) ein Hitzeschutzring (21) als Wärmeschutzschild und zur Ausbildung einer wärmeisolierenden Luftkammer (22) vorgeschaltet ist.

2. Hydraulische Wellendichtung nach Anspruch 1, **dadurch gekennzeichnet, dass** der Hitzeschutzring (21) einstückig an die Hochdruckwelle (1) angeformt ist.

3. Hydraulische Wellendichtung nach Anspruch 1, **dadurch gekennzeichnet, dass** der U-förmige Ringraum (8) eine nahe dem Hitzeschutzring (21) an die Hochdruckwelle (1) angeformte erste Ringscheibe (11) und eine von der Hochdruckwelle (1) abgekoppelte zweite Ringscheibe (12) sowie einen im Abstand von der Innenfläche der Hochdruckwelle (1) und der zweiten Ringscheibe (12) fixierten umlaufenden Winkelring (13) umfasst, wobei in dem von dem Winkelring und dem Ringraum (8) gebildeten Ringkanal (18), der zum Abführen des erhitzten Dichtmediums an einer in Höhe der freien Kante des zweiten Ringsteges (12) liegenden Austrittsöffnung (19) vorgesehen ist, mehrere Abstandhalter (16, 17) angeordnet sind, die aufgrund ihrer Ausbildung und Ausrichtung eine Pumpwirkung auf das abzuführende erwärmte Dichtmedium ausüben.

4. Hydraulische Wellendichtung nach Anspruch 3, **dadurch gekennzeichnet, dass** die separat ausgebildete zweite Ringscheibe (12) mit Hilfe eines Sprengringes (15) unmittelbar am Lagerträger (20) der Hochdruckwelle (1) montiert ist.

5. Hydraulische Wellendichtung nach Anspruch 3, **dadurch gekennzeichnet, dass** an der freien Kante der Ringscheiben (11 und/oder 21) ein Kolbenring (14) angebracht ist, der bei der Rotation der Hochdruckwelle (1) einen engen Ringspalt freigibt.

6. Hydraulische Wellendichtung nach Anspruch 3, **dadurch gekennzeichnet, dass** an den Winkelring (13) auf der zum Ringraum (8) weisenden Seitenfläche Vorsprünge (24) zur Verwirbelung des Dichtmediums und zur Verbesserung des Dichtmedientransports im Ringraum (8) angebracht sind.

## Claims

1. Hydraulic shaft sealing arrangement for high-temperature applications, more particularly for concentric shafts (1, 2) of a gas turbine engine, to seal the high-pressure shaft (1) bearing chamber (5) located in the low-pressure zone and the low-pressure shaft (2) against the high-pressure zone (6), with an essentially U-shaped annulus (8) arranged circumferentially on the inner circumference of the high-pressure shaft (1) and containing a continuously exchanged sealing medium (10) held in it by centrifugal forces, and with an annular sealing fin (9) protruding into the sealing medium (10), **characterized in that**, before the annulus (8), a heat protection ring (21), as heat shield and for the formation of a thermally insulating air chamber (22), is arranged in the high-pressure zone (6) at a certain distance from the annulus (8), with a sealing gap (23) remaining towards the low-pressure shaft (2).

2. Hydraulic shaft sealing arrangement in accordance with Claim 1, **characterized in that** the heat protection ring (21) is one-piece with the high-pressure shaft (1).

3. Hydraulic shaft sealing arrangement in accordance with Claim 1, **characterized in that** the U-shaped annulus (8) comprises a first annular disk (11) formed on the high-pressure shaft (1) near the heat protection ring (21) and a second annular disk (12) decoupled from the high-pressure shaft (1) and a circumferential angular ring (13) fixed remotely of the inner surface of the high-pressure shaft (1) and the second annular disk (12), with several spacers (16, 17), whose design and orientation exert a pumping action on the heated sealing medium to be removed, being arranged in the annular duct (18) formed by the angular ring (13) and the annulus (8) and serving for removal of the heated sealing medium at an exit opening (19) located at the level of the free edge of the second annular disk (12).

4. Hydraulic shaft sealing arrangement in accordance with Claim 3, **characterized in that** the separate, second annular disk (12) is fitted immediately to the bearing support (20) of the high-pressure shaft (1) by means of a circlip (15).

5. Hydraulic shaft sealing arrangement in accordance with Claim 3, **characterized in that** a piston ring (14) is arranged at the free edge of the annular disks (11 and/or 21) which opens a narrow annular gap as the high-pressure shaft (1) rotates.

6. Hydraulic shaft sealing arrangement in accordance with Claim 3, **characterized in that** protrusions (24) are provided on the side of the angular ring (13) facing towards the annulus (8) for swirling the sealing medium and for better transporting the sealing medium in the annulus (8).

## Revendications

1. Joint d'arbre hydraulique pour la zone à températures élevées, en particulier pour les arbres (1, 2) concentriques d'un moteur à turbine à gaz, destiné à étanchéifier par rapport à la zone haute pression (6) le logement de palier (5) situé dans la zone basse pression pour l'arbre haute pression (1) et l'arbre basse pression (2), avec un espace annulaire (8) en forme de U pour l'essentiel sur le pourtour intérieur de l'arbre haute pression (1), dans lequel se trouve un agent d'étanchéité (10) continuellement échangé sous l'action des forces centrifuges, ainsi qu'une nervure d'étanchéité (9), qui plonge dans l'agent d'étanchéité (10), **caractérisé en ce qu'**un écran thermique annulaire (21) - en tant que protection thermique et pour former une chambre d'air (22) thermo-isolante - est placé en amont de l'espace annulaire (8) dans la zone haute pression (6) à une certaine distance de l'espace annulaire (8) et en formant une fente d'étanchéité (23) par rapport à l'arbre basse pression (2).

2. Joint d'arbre hydraulique selon la revendication n° 1, **caractérisé en ce que** l'écran thermique annulaire (21) est intégralement formé sur l'arbre haute pression (1).

3. Joint d'arbre hydraulique selon la revendication n° 1, **caractérisé en ce que** l'espace annulaire (8) en forme de U comprend un premier disque annulaire (11) formé sur l'arbre haute pression (1) à proximité de l'écran thermique annulaire (21), un second disque annulaire (12) désaccouplé de l'arbre haute pression (1) ainsi qu'une cornière annulaire (13) circonférentielle fixée à une certaine distance de la face intérieure de l'arbre haute pression (1) et du second disque annulaire (12), sachant que dans le canal annulaire (18) formé par la cornière annulaire et l'espace annulaire (8) et prévu pour évacuer l'agent d'étanchéité échauffé par l'intermédiaire d'une orifice de sortie (19) au niveau du bord libre du second disque annulaire (12), de plusieurs entretoises (16, 17) sont arrangées, qui du fait de leur structure et disposition exercent un effet de pompage sur l'agent d'étanchéité échauffé à évacuer.

4. Joint d'arbre hydraulique selon la revendication n° 3, **caractérisé en ce que** le second disque annulaire (12), séparément formé est monté immédiatement sur le support de palier (20) de l'arbre haute pression (1) moyennant un circlip (15).

5. Joint d'arbre hydraulique selon la revendication n° 3, **caractérisé en ce qu'**un segment de piston (14) est prévu sur le bord libre des disques annulaires (11 et/ou 21) qui, lors de la rotation de l'arbre haute pression (1), libère un étroit interstice annulaire.

6. Joint d'arbre hydraulique selon la revendication n° 3, **caractérisé en ce que** des encorbellements (24) sont formés sur la face latérale de la cornière annulaire (13) orientée vers l'espace annulaire (8), pour tourbillonner l'agent d'étanchéité et améliorer le transport de l'agent d'étanchéité dans l'espace annulaire (8).
